# FASCICULE DE BREVET EUROPEEN

(11) **EP 0 518 899 B1**
(45) Date de publication et mention de la délivrance du brevet: **04.05.1994**
(21) Numéro de dépôt: 91904681.3
(22) Date de dépôt: 06.03.1991
(51) Int. Cl.: B29C 33/10

(54) **SYSTEME D'EVACUATION D'AIR POUR MOULES DE VULCANISATION DE PNEUMATIQUES**
SYSTEM ZUR ENTLÜFTUNG VON REIFENFORMEN
SYSTEM FOR EVACUATING AIR FROM MOULDS FOR VULCANIZING TYRES

(30) Priorité: 07.03.1990 BE 9000256
(43) Date de publication de la demande: 23.12.1992
(73) Titulaire: FCT S.A., B-4720 La Calamine (BE)
(72) Inventeur: FACCENDA, Michel, B-4030 Liège (BE)
(74) Mandataire: Vanderperre, Robert
(86) Numéro de dépôt international: BE9100017
(87) Numéro de publication internationale: WO9113738

(56) Documents cités:
- EP-A- 0 033 387
- EP-A- 0 311 550
- GB-A- 1 016 124
- Industrial & Production Engineering, January 1980, H. Bührle et al.: "Venting the mould cavity of blow moulds", pages 56-59, see page 58; figures 9, 10
- Patent Abstracts of Japan, Vol. 9, No. 70 (M-367) (1793), 30 March 1985 & JP, A, 59202828 (TOYO SODA KOGYO) 16 November 1984

## Description

La présente invention concerne les moules de vulcanisation de pneumatiques et est relative à un système d'évacuation d'air.

Le but de l'invention est de créer un système d'évacuation d'air sans trace apparente sur la pièce vulcanisée, c'est-à-dire le pneumatique.

Comme systèmes d'évacuation d'air connus on peut citer le procédé à trous, dans lequel l'évacuation d'air est obtenue au travers des canaux plus ou moins grands réalisés directement ou indirectement, par l'intermédiaire de busettes, dans le moule. Ce procédé est facile à mettre en oeuvre et est adaptable à tous types de construction et dans les différentes parties du moule. Il présente cependant l'inconvénient que les trous ou canaux laissent passer le caoutchouc et donnent des traces plus ou moins apparentes sur la bande de roulement des pneumatiques. Ce procédé demande un entretien régulier et fastidieux des moules.

Dans un autre procédé connu, dit à joints non étanches, l'air est évacué au travers de petits espaces réalisés au travers des joints des différentes pièces composant le moule. Ce procédé est assez compliqué à mettre en oeuvre et demande des usinages très précis, il ne s'adapte pas à toutes les parties du moule et il n'est pas applicable à tous les types de construction. Le système, suivant ce procédé, une fois réalisé ne peut être ni modifié, ni complété par la suite. S'il ne laisse pas de trace sur la pièce vulcanisée, son entretien sans être fréquent est très coûteux.

Le système suivant l'invention offre les avantages des deux procédés ci-dessus sans en avoir les inconvénients. Sa mise en oeuvre est simple et est réalisée avec des outils appropriés.

On connaît par le brevet GB-A-1.016.124 et le brevet EP-A-0.311.550 un système d'évacuation d'air consistant en une chambre calibrée créée entre d'une part, la paroi du trou de fixation d'un évent dans le moule ou cheminée d'évacuation d'air et de gaz et, d'autre part, l'évent lui-même qui est constitué d'une pièce calibrée pleine.

Le système d'évacuation d'air suivant l'invention se distingue de ce système connu du fait que la pièce servant d'évent possède un diamètre correspondant à celui de la cheminée et est traversée axialement par une ou plusieurs chambres à passage d'air et de gaz, d'une largeur constante sur la partie dite d'étranglement et dimensionnées de manière à ne pas laisser passer le caoutchouc, de telle sorte que l'air et les gaz de vulcanisation emprisonnés dans les divers interstices du moule sont évacués à l'extérieur de la partie moulante au travers de cette ou de ces chambres à passage direct.

Pour réaliser le but recherché par l'invention il a paru avantageux de réaliser la pièce servant d'évent de telle manière que la largeur de la ou des chambres est comprise entre 0,02 mm et 0,06 mm avec une section résultante totale de la ou des chambres de 0,10 mm2 au minimum.

L'invention est décrite maintenant sur la base des dessins annexés, à titre d'exemples uniquement, montrant en :
Figure 1 une coupe dans une portion de moule munie d'une pièce servant d'évent suivant l'invention ;
Figure 2 une vue en plan de la portion de moule de la figure 1 ;
Figures 3 et 4 respectivement une coupe et une vue d'une variante de réalisation de la pièce servant d'évent ;
Figures 5 et 6 respectivement une coupe et une vue d'une troisième réalisation ;

On voit dans les différentes figures une portion de moule 1 présentant une cheminée d'évacuation d'air et de gaz 2. Dans cette cheminée d'évacuation est introduite une pièce servant d'évent réalisée suivant l'invention.

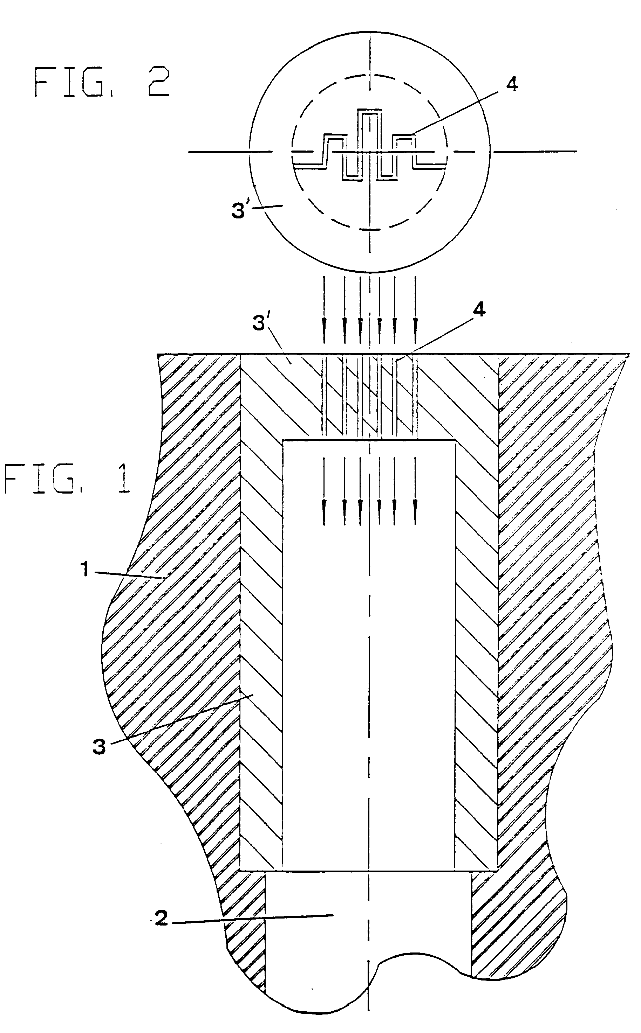

En figures 1 et 2 la pièce d'évent 3 se présente sous la forme d'une douille, dont la base 3' affleurant à la surface du moule 1 est pourvue d'une chambre de passage d'air et de gaz 4 en labyrinthe.

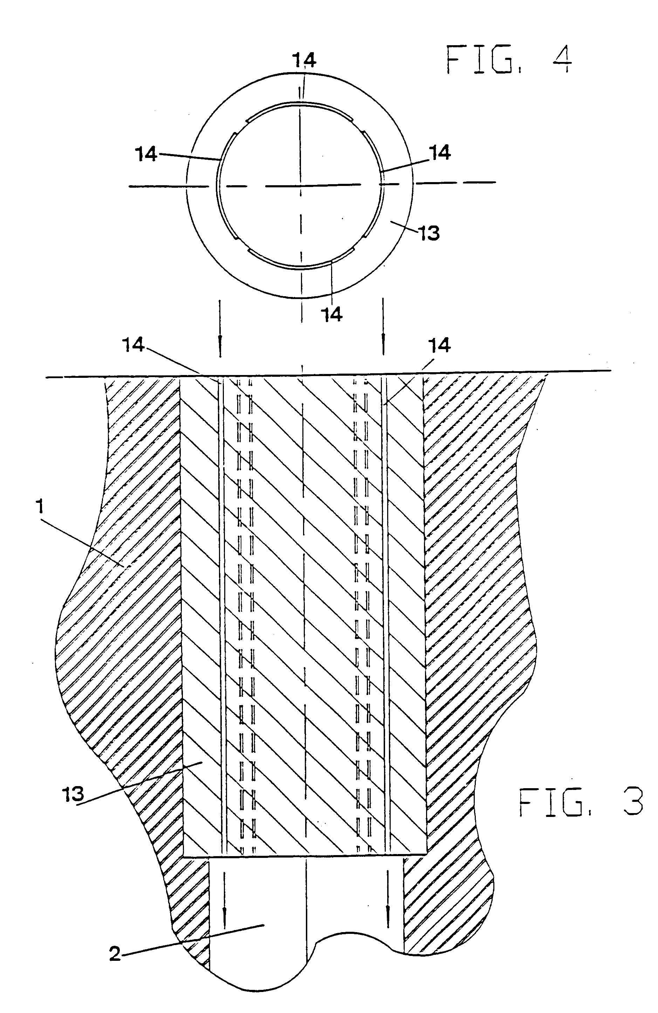

En figures 3 et 4 la pièce d'évent 13 se présente sous la forme d'un cylindre pourvu de quatre chambres longitudinales distinctes 14 disposées en arc de cercle sur une même circonférence.

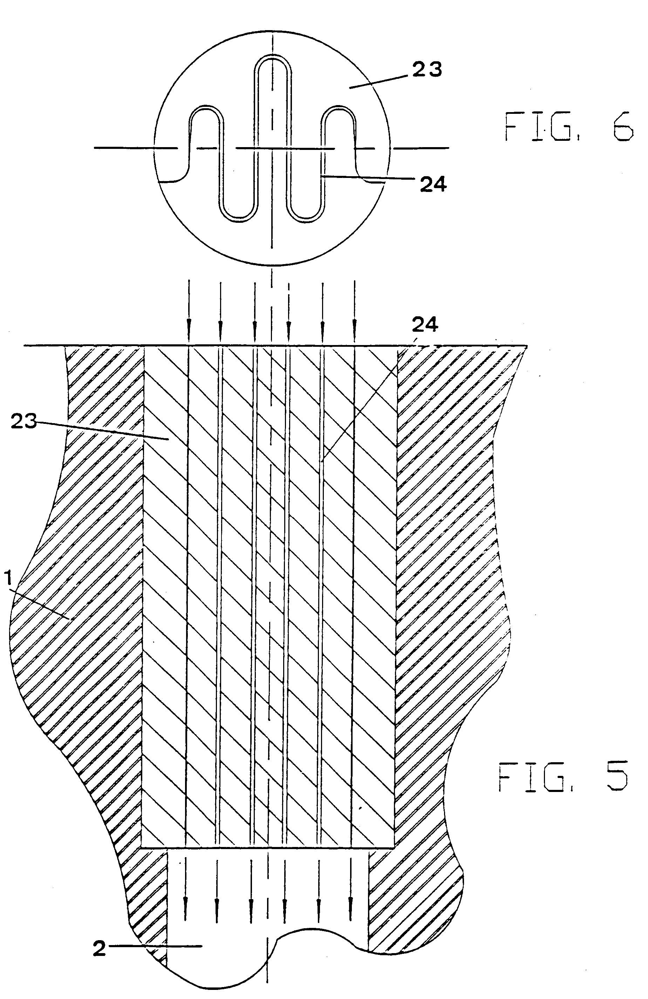

En figures 5 et 6 la pièce d'évent 23 se présente aussi sous la forme d'un cylindre avec une chambre longitudinale 24 en labyrinthe.

Les diverses chambres prévues dans les pièces d'évent sont dimensionnées de manière adéquate pour laisser passer l'air et les gaz sans pour autant laisser passer le caoutchouc et, donc, sans trace apparente sur la surface de la pièce vulcanisée. Ce dimensionnement de la ou des chambres à passage direct est le suivant :
- largeur de la ou des chambres:de 0,02 mm à 0,006 mm;
- section résultante totale de la ou des chambres: 0,10mm2 minimum.

Le type de pièce d'évent utilisé est fonction de son implantation dans le moule, des matériaux constituant le moule, du soin apporté à sa fixation mécanique et de la facilitée recherchée pour son éventuel remplacement.

Le système suivant l'invention est économique car, une fois placée, la pièce d'évent ne demande pas d'entretien régulier et même, lors du nettoyage du moule qui est une opération fréquemment réalisée dans les moules de vulcanisation, aucune précaution ne doit être prise pour sa protection ou son nettoyage.

En cas de défectuosité d'un ou plusieurs pièces d'évent, ils peuvent être remplacés dans le moule sans que cela nécessite ni le démontage du moule hors de la presse, ni son refroidissement complet.

Le système suivant l'invention est applicable sur moule neuf, moule usagé et peut être complété par adjonction de pièces d'évent à n'importe quel moment de la vie du moule.

## Revendications

1. Système d'évacuation d'air pour moules de vulcanisation de pneumatiques pourvus de cheminées d'évacuation (2), dans chacune desquelles affleure à la surface du moule (1) une pièce calibrée servant d'évent, caractérisé en ce que la pièce servant d'évent (3,13,23) possède un diamètre correspondant à celui de la cheminée (2) et est traversée axialement par une ou plusieurs chambres de passage d'air et de gaz (4,14,24), d'une largeur constante sur la partie dite d'étranglement et dimensionnées de manière à ne pas laisser passer le caoutchouc.

2. Système d'évuacuation d'air suivant la revendication 1, caractérisé en ce que la section résultante totale de la ou des chambres de passage d'air et de gaz (4,14,24) est au minimum de 0,10 mm2.

## Patentansprüche

1. System zur Entlüftung der Formen zur Vulkanisation von Reifen, die mit Entlüftungsschächten (2) versehen sind, in die jeweils ein als Entlüftung dienendes kalibriertes Teil bündig zur Oberfläche der Form (1) eingelassen ist,
dadurch gekennzeichnet, daß
das zur Entlüftung dienende Teil (3,13,23) einen dem Schacht (2) entsprechenden Durchmesser aufweist und in axialer Richtung von ein oder mehreren Luft- und Gasdurchlaßkammern oder -Schlitzen (4,14,24) durchsetzt ist, die eine konstante Weite in einem sogenannten Drosselteil aufweisen und so dimensioniert sind, daß sie den Kautschuk nicht hindurchlassen.

2. System zur Entlüftung nach Anspruch 1,
dadurch gekennzeichent, daß
der Gesamtquerschnitt der Luft- und Gasdurchlaßkammer oder -kammern (4,14,24) mindestens 0,10 mm2 beträgt.

## Claims

1. A system for evacuating air from a tire-vulcanizing mould provided with vent holes (2) each provided with a calibrated vent part opening flush with the surface of the mould (1), characterized in that the part serving as vent (3, 13, 23) has a diameter corresponding to that of the vent hole (2) and is axially traversed by one or more throughgoing air- and gas-flow passages (4, 14, 24) of a constant cross section in the restricted region and dimensioned so as not to let rubber pass.

2. The air-evacuation system according to claim 1, characterized in that the resultant flow-cross section of the air- and gas-flow passage(s) (4, 14, 24) is at least 0.10 mm².
